# EUROPÄISCHE PATENTANMELDUNG

(11) **EP 1 669 615 A1**
(43) Veröffentlichungstag der Anmeldung: **14.06.2006**
(21) Anmeldenummer: 05024786.5
(22) Anmeldetag: 14.11.2005
(51) Int. Cl.: F16B 13/00

(54) **Schraubdübel**

(30) Priorität: 10.12.2004 CH 20622004
(71) Anmelder: MUNGO BEFESTIGUNGSTECHNIK AG, 4616 Kappel (CH)
(72) Erfinder: Bappert, Adolf, 4616 Kappel (CH)
(74) Vertreter: Quehl, Horst Max

(57) **Zusammenfassung**

Der Schraubdübel (1) hat einen für die Aufnahme eines einschraubbaren Befestigungselementes bestimmten, ein äusseres Schneidgewinde (3) und einen Endflansch (19) aufweisenden Hülsenkörper (2) und endet in einem Vorbohrelement (20). Dieses besteht aus einem oder mehr parallel zueinander verlaufenden, frei endenden Bohrschenkeln (21,22), die mit ihrer radial inneren und äusseren Begrenzungsfläche eine Fortsetzung der Wand des Hülsenkörpers (2) bilden und die eine längsgerichtete Schneidkante (23) bilden. Diese Schneidkanten (23) enden in jeweils einer äusseren Schneidspitze (28,29). Am freien Ende eines radial nach innen gerichteten Fortsatzes (35) eines der Bohrschenkel (22) ist eine Zentrierspitze (34) vorgesehen, die sich beim Vordringen eines langen Befestigungslementes (1) durch dieses wegdrücken lässt. Der Schraubdübel (1) bietet bei guter Bohrwirkung und guter Verankerung z.B. in einer Gipswand einem Befestigungselement bzw. für dessen Schneidgewinde eine Eingriffslänge, die sich über den Hülsenkörper (2) hinaus bis in den mindestens einen, frei endenden Bohrschenkel (21,22) hinein erstreckt.

## Beschreibung

Die Erfindung betrifft einen Schraubdübel mit einem für die Aufnahme eines einschraubbaren Befestigungselementes bestimmten, ein äusseres Schneidgewinde und einen Endflansch aufweisendem Hülsenkörper und mit einem Vorbohrelement, das in zwei äusseren Schneidspitzen und einer Zentrierspitze endet.

Schraubdübel dieser Art sind bekannt durch die US 4601625 und die US 5190425. Ihr an den Hülsenkörper zentral angeformtes Vorbohrelement, z.B. nach Art eines Flachbohrers oder eines Spiralbohrers, soll vermeiden, dass ein Aufnahmeloch für den Hülsenkörper in einem separaten Arbeitsgang vorgebohrt werden muss. Da jedoch bei einer bestimmten Drehgeschwindigkeit beim Setzen des Schraubdübels das Einschneiden des Schneidgewindes zu einer schnelleren Axialbewegung des Schraubdübels führt als der geeigneten Bohrgeschwindigkeit beim gleichzeitigen Vorbohren eines Aufnahmeloches entspricht, hat bei diesen Schraubdübeln das Vorbohrelement angenähert die gleiche Länge wie ihre Schraubhülse, so dass das Aufnahmeloch bereits vollendet ist, wenn das Schneidgewinde des Hülsenkörpers beginnt, sich in dem Aufnahmeloch einzuschneiden. Diese Problematik ist auch in der US 4034641 an Hand einer massiven Schraube anschaulich beschrieben.

Da bei solchen Schraubdübeln der Hülsenkörper am Übergang zum Vorbohrelement zentral verschlossen ist, ergibt sich der Nachteil, dass die für den Eingriff eines Befestigungselementes zur Verfügung stehende Länge des Hülsenkörpers relativ gering ist und nur verhältnismässig kurze Befestigungselemente zur Anwendung kommen können. Bei längerer Ausführung des Hülsenkörpers und folglich auch des Vorbohrelementes besteht andererseits die Gefahr, dass das Bohrende z.B. hinter einer Gipsplatte auf ein Hindernis, wie z.B. auf eine Betonwand trifft.

Durch die US 4601625 wurde deshalb vorgeschlagen, das Vorbohrelement durch eine Schwächungsstelle zwischen dem Hülsenkörper und dem Vorbohrelement bei Kontakt mit einem einschraubbaren Befestigungselement wegbiegbar auszuführen. Die hierzu am Befestigungselement aufzubringende entsprechend grosse Drehkraft kann jedoch durch ihre Übertragung auf den Schraubdübel zur Zerstörung seines Eingriffs im umgebenden Material führen, insbesondere bei seiner typischen Anwendung an Gipswänden.

Durch die EP 0575295 ist es weiterhin bekannt, einem Befestigungselement bei vorgegebener Gesamtlänge des Schraubdübels eine wesentlich grössere Eindringtiefe zur Verfügung zu stellen, ohne dass sein Vorbohrelement hierfür zerstört bzw. weg gebogen werden muss. Dies wurde durch ein kurzes, konisch auslaufendes, fräserartiges Bohrende und die besondere Ausbildung des sich anschliessenden vorderen Bereiches der Schraubhülse mit Mitteln zur erleichterten Ableitung von Bohrmehl erreicht. Das kurze, verhältnismässig massive Bohrende verhindert oder erschwert es jedoch, ein Befestigungselement über die Gesamtlänge des Schraubdübels hinaus vorzutreiben.

Der Erfindung liegt die Aufgabe zugrunde, einen Schraubdübel der genannten Art zu finden, der bei guter oder verbesserter Bohrwirkung die genannten Nachteile vermeidet, der somit im Verhältnis zu seiner Gesamtlänge eine maximale Eingriffslänge für ein einschraubbares Befestigungselement zur Verfügung stellt, der eine gute Ableitung von Bohrmehl gewährleistet und der darüber hinaus ein Durchdringen eines Befestigungselementes über das Bohrende hinaus zulässt, ohne dass hierzu am Befestigungselement eine wesentlich erhöhte Einschraubkraft aufzubringen ist. Die Lösung dieser Aufgabe erfolgt erfindungsgemäss aufgrund der kennzeichnenden Merkmale des Patentanspruchs 1. Vorteilhafte Ausgestaltungen erfindungsgemässer Schraubdübel sind Gegenstand der abhängigen Patentansprüche und der folgenden Beschreibung anhand der Zeichnungen zu entnehmen.

Es zeigt:

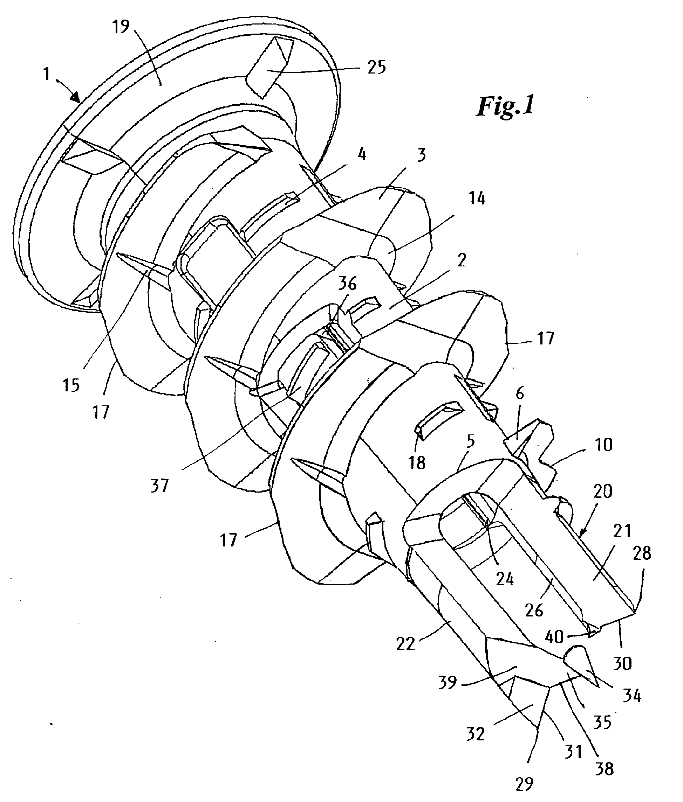

Fig.1 eine perspektivische Seitenansicht eines erfindungsgemässen Schraubdübels mit Sicht gegen die Unterseite seines Endflansches in vergrösserter Darstellung,

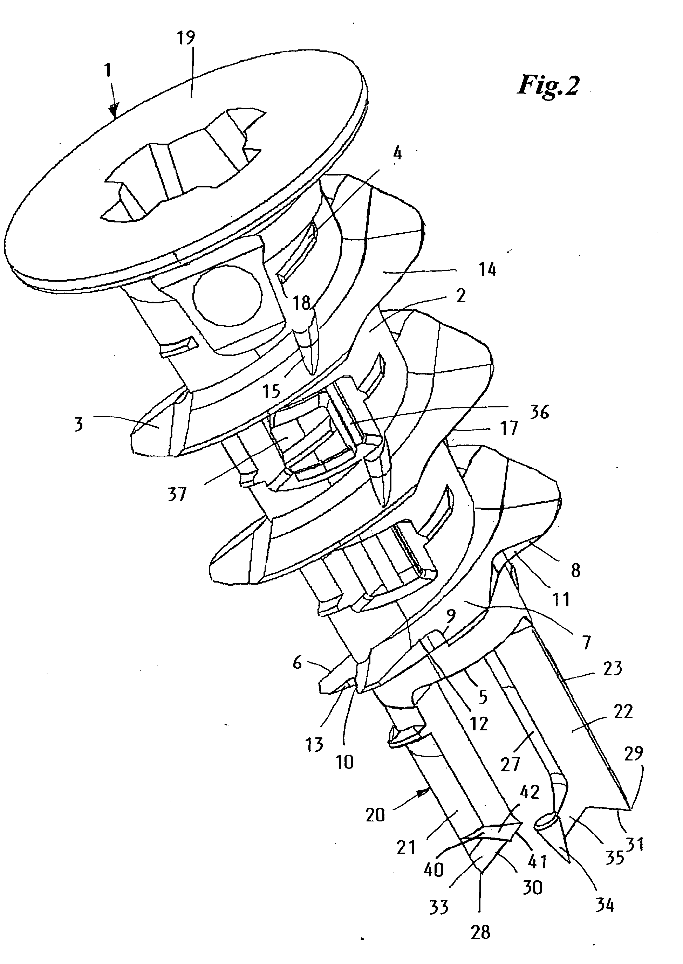

Fig.2 eine perspektivische Seitenansicht eines Schraubdübels nach Fig.1 aus anderem Bildwinkel und mit Sicht gegen die Oberseite seines Endflansches,
Fig.3 eine perspektivische Darstellung einer weiteren Ausführungsform eines erfindungsgemässen Schraubdübels,
Fig.4 einen Axialschnitt des Schraubdübels nach Fig.3 und
Fig.5 eine perspektivische Darstellung eines vorderen Bereichs des Schraubdübels nach Fig.3 und 4 unter anderem Blickwinkel.

Ein erfindungsgemässer Schraubdübel 1 hat entsprechend dem dargestellten Ausführungsbeispiel einen vorzugsweise leicht konischen Hülsenkörper 2 mit einem äusseren Schneidgewinde 3, mit dem er in umgebendem Material, wie z.B. in einer Gipsplatte, ein komplementäres Eingriffsgewinde einschneiden kann und ein dazu parallel verlaufendes Sekundärgewinde 4 mit wesentlich geringerer Ganghöhe. Das Schneidgewinde 3 erstreckt sich über die gesamte Länge des Hülsenkörpers 2 und endet in der Nähe von dessen Endkante 5 an einem Absatz, so dass dieser eine vordere Schneidkante 6 bildet. Der Flankenwinkel des Schraubgewindes 3 ist im Vergleich zu demjenigen von üblichen Holzschrauben verhältnismässig spitz und sein Steigungswinkel verhältnismässig klein, so dass der Schraubdübel 1 besonders für Befestigungen in wenig festem Material, wie z.B. in Gipswänden eine gute Verankerung findet.

Eine verbesserte Schneidwirkung des Schneidgewindes 3 ergibt sich u.a. dadurch, dass sich seine Ganghöhe zumindest entlang seines um ca. 180° verlaufenden Endbereichs 7 bis zur Schneidkante 6 hin verringert und in diesem Endbereich 7 ausserdem Schneidkanten 8,9,10 bildende Ausschnitte oder Unterbrechungen 11,12,13 aufweist. Auch die Flanken des Schneidgewindes 3 haben in Umfangsrichtung aufeinander folgende, flache Ausbuchtungen 14 und sind mit sich über die Gangbreite radial verlaufenden, Schneidkanten bildenden Rippen 15 versehen. Weiterhin wird die Schneidwirkung des Schneidgewindes 3 durch einen unregelmässigen Verlauf seiner Aussenkante 16 verbessert, der, abweichenden von einem kreisbogenförmigen Verlauf, beispielsweise durch gerade oder nach innen gekrümmte Abschnitte 17 gebildet wird.

Auch das zu dem Schneidgewinde 3 parallel verlaufende Sekundärgewinde 4 hat Unterbrechungen, so dass es sich nur stückweise um den Hülsenumfang erstreckt und seine Gangstücke jeweils in Drehrichtung vordere Schneidkanten 18 bilden.

Das somit eine mehrfache Profilierung aufweisende Schneidgewinde 3 hat beispielsweise einen Aussendurchmesser, der doppelt so gross ist wie derjenige des Hülsenkörpers 2. Somit ergibt sich auch bei einer verhältnismässig geringen Länge des Hülsenkörpers 2 eine gute Verankerung auch in bröckeligem Baumaterial, wie z. B. in Gips.

Am hinteren Ende der Schraubdübel ist ein Flansch 19 angeformt, durch den sich der vollständig in eine Bauplatte eingeschraubte Schraubdübel 1 an der Wandoberfläche abstützt. An der Unterseite des Flansches 5 vorgesehene, im Querschnitt widerhakenartige Radialrippen 25 tragen durch Einarbeitung in eine Wandoberfläche zur verdrehfesten Verankerung des Schraubdübels 1 bei.

Damit der Schraubdübel 1 selbst bohrend auf einfache Weise durch Einschrauben in einem Baumaterial verankert werden kann, wie z.B. in einer Gipsplatte, d.h. ohne in einem separaten Arbeitsgang ein Loch vorbohren zu müssen, geht der Hülsenkörper 2 nach vorn in ein Vorbohrelement 20 über. Dieses besteht bei den dargestellten Ausführungsbeispielen aus zwei diametral einander gegenüberliegenden Bohrschenkeln 21,22, deren Längskanten 23 Schneidkanten bilden, indem sich ihre in Schneidrichtung voreilende Seitenfläche zumindest angenähert radial nach innen erstreckt. Das entstehende Bohrmehl kann in den Raum zwischen den Bohrschenkeln 21,22 hinein abströmen.

Anstatt von zwei kann jedoch auch nur ein Bohrschenkel in gleicher Ausführung und Anordnung wie der Bohrschenkel 22 vorgesehen sein oder es können zusätzlich zu einem Bohrschenkel 22 dieser Art auch zwei weitere Bohrschenkel und damit insgesamt drei vorgesehen sein, die entsprechend dem Bohrschenkel 21 ausgeführt sind.

Die Bohrschenkel 21,22 sind vorzugsweise als absatzfreie Fortsetzung der Wand des Hülsenkörpers 2 ausgebildet und haben somit die Querschnittsform eines Ringsektors. Somit kann sich das Gewinde eines Befestigungselementes nicht nur in die Innenwand bzw. in dort vorgesehene Längsrippen 24 einschneiden, sondern findet nach Durchdringen des Hülsenkörpers an der Innenwand 26,27 der Bohrschenkel 21,22 weiteres Material für ein weitergehendes Einschneiden in den Schraubdübel.

Das freie Ende beider Bohrschenkel 21 und 22 endet aussen in je einer Spitze 28,29, deren äusserer Schenkel eine Fortsetzung der Schneidkante 23 der Bohrschenkel 21,22 bildet. Ausgehend von den inneren Schenkeln 30,31 der Spitze 28,29 ist das freie Ende der Bohrschenkel 21,22 in nacheilender Schneidrichtung über eine Schrägfläche 32,33 abgeschrägt, so dass diese inneren Schenkel 30, 31 der Spitzen 28,29 eine frontseitige Schneidkante bilden. Diese Form der freien Enden der Bohrschenkel 21,22 gewährleistet eine sauberen Anschnitt zu Beginn des Bohrens, auch wenn z.B. eine Gipswand eine äussere Papierschicht trägt. Dabei können die Schneidkanten auch zahnartig in Längsrichtung des Schraubdübels 1 versetzt und mit unterschiedlicher Neigung ihrer nacheilend angrenzenden, als Spanleitfläche dienenden Schrägfläche 33 ausgeführt sein, wie das Beispiel des inneren zahnartigen Fortsatzes 40 mit der Schneidkante 41 und der Schrägfläche 42 zeigt.

Die erforderliche Zentrierung des Vorbohrelementes 20, die auch eine exakte Positionierung des Schraubdübels 1 gewährleistet, wird durch eine beispielsweise kegelförmige Zentrierspitze 34 erreicht, die an einem radial nach innen gerichteten Fortsatz 35 eines der Bohrschenkel 7,8 angeformt ist.

Beim Einbringen eines Befestigungselementes, dessen Länge nicht der Länge des Schraubdübels 1 angepasst ist, kann eine solche Zentrierspitze 34 durch das Befestigungselement mit geringem Kraftaufwand zur Seite gedrückt werden, so dass keine Gefahr besteht, dass durch eine solche Kraft die Verankerung des Schraubdübels im umgebenden Material beschädigt oder zerstört wird.

Vorzugsweise hat der radial nach innen gerichteten Fortsatz 35 des Bohrschenkels 22 einen spitzwinkeligen Querschnitt, mit einer vorderen Querschnittskante, so dass diese als Schneidkante 38 dient. Dabei bildet eine sich an diese Schneidkante 38 anschliessende Schrägfläche 39 des Fortsatzes 35, ebenso wie die Schrägflächen 32,33 der Bohrschenkelenden, eine Spanleitfläche 39.

Die beschriebene Ausgestaltung des Vorbohrelementes 20 gewährleistet durch besonders gute Schneidwirkung seiner Kanten (30, 31, 38, 23, 41) und grossen Freiräume zur Ableitung und Aufnahme von Bohrmehl bei geringem Kraftaufwand ein schnelles Vordringen des Schraubdübels 1 im Wandmaterial eines Bauwerkes. Dieses schnelle Vordringen ermöglicht auch die im Verhältnis zur Länge der Gewindehülse 2 geringe Länge der Bohrschenkel 21, 22, da ein bei beginnendem Eingriff des Sekundärgewindes 4 sowie des Schneidgewindes 3 entstehender schnellerer Vortrieb des Schraubdübels 1 durch schnelleren Bohrvortrieb kompensiert werden kann.

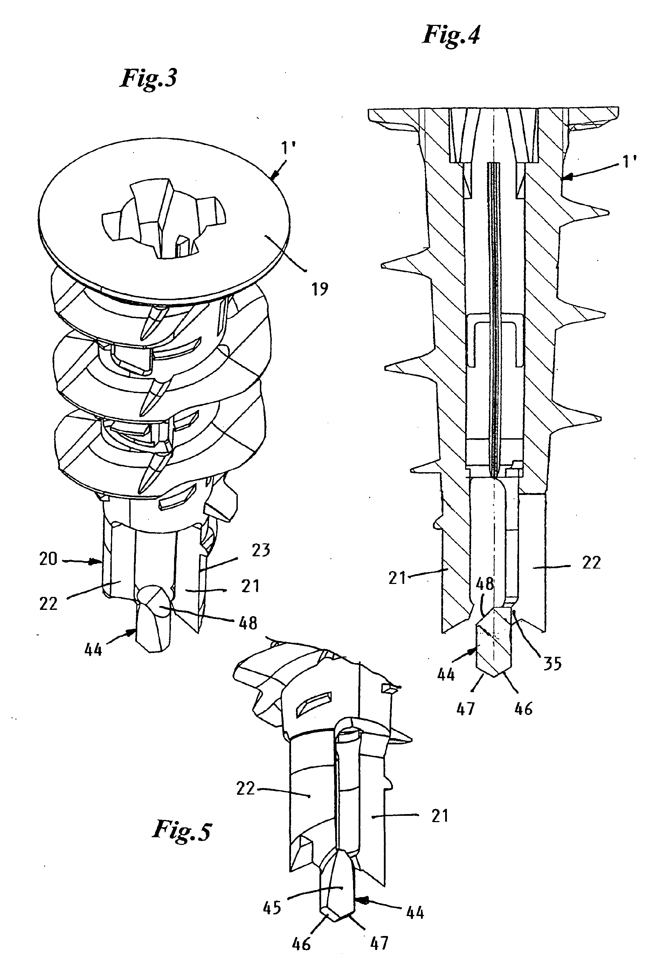

Der Schraubdübel 1' entsprechend den Darstellungen der Fig.3 bis 5 unterscheidet sich gegenüber dem zuvor beschriebenen Schraubdübel durch eine meisselartige Ausbildung der Zentrierspitze 44, indem sie mindestens eine seitliche Abflachungen 45 und zwei z.B. im stumpfem Winkel zueinander gerichtete vordere Schneidkanten 46,47 aufweist. An seiner zum Dübelinnenraum gerichteten, freien Rückseite ist eine Schrägfläche 48 vorgesehen, an dem ein gegenüber dem Schraubdübel längeres Befestigungselement beim Eindringen in Kontakt gelangt, so dass die Zentrierspitze 44 leichter zur Seite gedrückt wird.

Für den Eingriff von Antriebsmitteln zum Drehen des Schraubdübels 1 hat dieser am hinteren Ende des Hülsenkörpers 2 kreuzweise angeordnete Einschnitte 16 und nach innen sich anschliessende Längsrippen einer Eingriffsprofilierung.

Ein besonders gut geeignetes Drehwerkzeug, das eine sichere axiale Führung während des Setzens des Schraubdübels 1 gewährleistet, ist durch die DE 4439973 bekannt. Um den Eingriff verschieden profilierter Bitwerkzeuge zu ermöglichen, können die Längsrippen der Eingriffsprofilierung verschiedene Abstände voneinander haben, wie es durch die EP 1298331 bekannt ist.

Für eine Verbesserung der Verankerung des Schraubdübels 1 im umgebenden bröckeligen Material können zusätzlich zu dem äusseren Schneidgewinde 3 in einer Wandöffnung 36 des Hülsenkörpers 2 scharnierartig Ankerklinken 37 gehalten sein, die teilweise in den Innenraum des Hülsenkörpers 2 hinein ragen, so dass sie beim Eindringen des Befestigungselementes örtlich nach aussen in das umgebende Material gedrückt werden.

Für eine einfache Herstellung im Spritzgiessverfahren besteht der Schraubdübel aus einem hierfür geeigneten Material wie z.B. aus Zinkdruckguss oder aus einem Glasfaserkunststoff. Seine Gesamtlänge beträgt beispielsweise 30 mm und die Länge seiner Bohrschenkel 10 mm.

## Patentansprüche

1. Schraubdübel mit einem für die Aufnahme eines einschraubbaren Befestigungselementes bestimmten, ein äusseres Schneidgewinde (3) und einen Endflansch (19) aufweisendem Hülsenkörper (2) und mit einem Vorbohrelement (20), das in zwei äusseren Schneidspitzen (28,29) und einer Zentrierspitze (34) endet, **dadurch gekennzeichnet, dass** das Vorbohrelement (20) mindestens einen parallel zur Achse des Hülsenkörpers (2) verlaufenden, frei endenden Bohrschenkel (21,22) aufweist, der zumindest mit seiner radial äusseren Begrenzungsfläche eine Fortsetzung der kreisbogenförmig gekrümmten Wand des Hülsenkörpers (2) bildet, wobei die Zentrierspitze (34) am freien Ende eines nach innen gerichteten Fortsatzes (35) des Bohrschenkels (22) vorgesehen ist.

2. Schraubdübel nach Anspruch 1, **dadurch gekennzeichnet, dass** der mindestens eine Bohrschenkel (21,22) über seine gesamte Länge eine Schneidkante (23) bildet, die entsprechend einer Fortsetzung einer Mantellinie des Hülsenkörpers (2) verläuft, wobei der Endbereich der Schneidkante (23) einen Schenkel einer endseitigen Schneidspitze (28,29) bildet und der innere Schenkel (30,31) der Spitze (28,29) in nacheilender Schneidrichtung in eine Schrägfläche (32,33) des Bohrschenkels (21,22) übergeht, so dass der innere Schenkel (30,31) der Spitze (28,29) eine frontseitige Schneidkante bildet.

3. Schraubdübel nach Anspruch 1, **dadurch gekennzeichnet, dass** frontseitige Schneidkanten (30,41) in Längsrichtung des Schraubdübels (1) zahnartig zueinander versetzt und mit unterschiedlicher Neigung ihrer nacheilend angrenzenden, als Spanleitfläche dienenden Schrägfläche (33,42) ausgeführt sind.

4. Schraubdübel nach einem der Ansprüche 1, **dadurch gekennzeichnet, dass** der radial nach innen gerichtete Fortsatz (35) des Bohrschenkels (22) einen spitzwinkeligen Querschnitt hat, mit einer vorderen Querschnittskante (38), so dass diese eine Schneidkante bildet und sich an diese eine Spanleitfläche (39) anschliesst.

5. Schraubdübel nach einem der Ansprüche 1, **dadurch gekennzeichnet**, zwei diametral zueinander angeordnete, frei endende Bohrschenkel (21,22) vorhanden sind.

6. Schraubdübel nach Anspruch 5, **dadurch gekennzeichnet, dass** die Bohrschenkel (21,22) kürzer sind als der Hülsenkörper (22) , so dass ein Gewindeabschnitt (7) des Hülsenkörpers (2) vor Beendigung des Vorbohrens in Materialeingriff gelangt.

7. Schraubdübel nach Anspruch 6, **dadurch gekennzeichnet, dass** die Länge des mindestens einen Bohrschenkels (21,22) mindestens angenähert einem Drittel der Gesamtlänge des Schraubdübels (1) entspricht.

8. Schraubdübel nach Anspruch 1, **dadurch gekennzeichnet, dass** die Ganghöhe des Schneidgewindes (3) sich zum Vorbohrelement (20) hin verringert und angrenzend an das Vorbohrelement mit einem eine Schneidkante(6) bildenden Absatz endet.

9. Schraubdübel nach Anspruch 8, **dadurch gekennzeichnet, dass** die Verringerung der Ganghöhe des Schneidgewindes (3) entlang einer Bogenlänge (7) von mindestens angenähert 180° erfolgt.

10. Schraubdübel nach Anspruch 1, **dadurch gekennzeichnet, dass** das Schneidgewinde (3) Schneidkanten (8-10) bildende Ausschnitte (10-12) oder Unterbrechungen aufweist.

11. Schraubdübel nach Anspruch 1, **dadurch gekennzeichnet, dass** ein zum Schneidgewinde (3) parallel laufendes Sekundärgewinde (4) mit geringerer Ganghöhe vorgesehen ist, wobei dieses aus mit Abstand aufeinander folgenden Gewindestücken besteht, so dass jedes Gewindestück eine in Drehrichtung vordere Schneidkante (18) aufweist.

12. Schraubdübel nach Anspruch 11, **dadurch gekennzeichnet, dass** das Sekundärgewinde (4) mit gegenüber dem Schneidgewinde (3) geringerer Ganghöhe sich bis über einen Teil der Länge des Vorbohrelementes (20) erstreckt.

13. Schraubdübel nach Anspruch 1, **dadurch gekennzeichnet, dass** die Bohrspitze (44) mindestens eine seitliche Abflachung (45) sowie zwei stirnseitige, im Winkel zu einander verlaufende Schneidkanten (46,47) aufweist.

14. Schraubdübel nach Anspruch 13, **dadurch gekennzeichnet, dass** an der zum Dübelinnenraum gerichteten, freien Rückseite der Bohrspitze (44) eine Schrägfläche (48) vorgesehen ist.
